(19) Europäisches Patentamt
European Patent Office
Office européen des brevets

(11) Publication number: **0 222 201 B1**

(12) **EUROPEAN PATENT SPECIFICATION**

(45) Date of publication of the patent specification: **04.07.90**

(51) Int. Cl.⁵: **C08L 21/00**, C08L 27/12 // (C08L21/00, 71:00),(C08L27/12, 71:00)

(21) Application number: **86114358.4**

(22) Date of filing: **16.10.86**

(54) **Processing coadjuvants for rubbers vulcanizable by means of peroxides.**

(30) Priority: **17.10.85 IT 2253285**

(43) Date of publication of application: **20.05.87 Bulletin 87/21**

(45) Publication of the grant of the patent: **04.07.90 Bulletin 90/27**

(84) Designated Contracting States: **DE ES FR GB IT NL SE**

(56) References cited:
**EP-A- 0 023 957**
**US-A- 3 987 126**

**CHEMICAL ABSTRACTS, vol. 99, no. 39, 1983, page 51, abstract no. 54890c, Columbus, Ohio, US; A.A.KUT'KOV et al.: "Low-molecular-weight polysulfide rubber stock", & OTKRYTIYA, IZOBRET., PROM. OBRAZTSY, TOVARNYE ZNAKI 1983, (16), 78**

(73) Proprietor: **AUSIMONT S.r.l., 31, Foro Buonaparte, I-20100 Milano(IT)**

(72) Inventor: **Tommasi, Giulio, 52, via Cadore, I-20135 Milan(IT)**
Inventor: **Ferro, Raffaele, 65, via Mauro Macchi, I-20124 Milan(IT)**
Inventor: **Cirillo, Gianna, 8/7, Salita s. Francesco, I-16124 Genova(IT)**

(74) Representative: **Barz, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40(DE)**

EP 0 222 201 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to rubbers which are vulcanizable by means of peroxides and exhibit improved processability such as a better extrudability and a better release of the vulcanized article from the molding dies utilized for injection molding or compression molding.

EP-A 23 957 discloses vulcanizable compositions comprising polytetrafluoroethylene in powder form and, as processing aids, a fluorinated polyamide in combination with a polyfluoropolyether having oily consistency.

The invention is based on the use of additives of the class of perfluoropolyethers and derivatives thereof of the following general formula:

$$A-(O-C_3F_6)_m-(\underset{\displaystyle T}{\underset{|}{OCF}})_n-(OCF_2CF_2)_q-O-B \qquad (I)$$

wherein T is F or $CF_3$, m, n and q are integers, zero included; m+n+q ranges from 2 to 200,

$$\frac{m}{n+q}$$

is ≤ 50 when n and/or q are different from zero; when m = 0, q/n is ≥ 0.2 and ≤ 20, n being different from zero; when q = 0, m/n ranges from 1 to 50, n being different from zero; A and B are the same or different and represent

$$-CF_2X,\ -CF_2-CF_2-X,\ -\underset{\displaystyle CF_3}{\underset{|}{CF}}-X,\ -CF_2-CFX-CF_3,\ -COF,\ -CF_2-COF \text{ or}$$

$$-\underset{\displaystyle CF_3}{\underset{|}{CF}}-CO.F,$$

X being bromine or fluorine; when m is different from zero, X can be bromine only in A or in B.

Particularly suitable are the liquid products with a mean molecular weight ranging from 500 to 10 000, the preferred ones being those which contain at least a bromine atom in at least one of end groups A and B.

Perfluoropolyethers of the formula:

$$F-(CF_2CF_2CF_2-O)_n-CF_2CF_3 \qquad (II)$$

where n is an integer higher than 2 and lower than 200, prepared according to the method described in European patent 148 482 may also be used.

Furthermore, it is possible to use mixtures of neutral compounds of classes (I) and/or (II) with the brominated compounds of class (I). The term "neutral compounds" denotes a perfluoropolyether having terminal groups without bromine. These end groups render the compounds chemically inert. Compounds of formula (I) which are useful as additives according to the invention are, for instance, the perfluoropolyethers prepared by photochemical oxidation of $C_2F_4$ or $C_3F_6$, commercially known as Fomblin®Z and Fomblin®Y and the perfluoropolyethers of the class of polymers derived from perfluoropropene-epoxide, commercially known as Krytox®. It is also possible to utilize perfluoropolyethers prepared by photochemical oxidation of $C_2F_4$ and $C_3F_6$.

Particularly suitable are brominated perfluoropolyether derivatives prepared according to the processes described in IT-A-19653 A/85 and 22517 A/85 and obtained as mixtures of products at different bromination degrees.

The additives according to the present invention are dispersed in rubbers vulcanizable by means of peroxides or by means of mixed peroxy and ionic vulcanisation systems in blends thereof in order to improve their processability characteristics, as explained above.

As is known, the vulcanization systems based on peroxides are capable of vulcanizing many types of rubber, imparting to the vulcanized articles such properties as a high stability to heat, chemical agents and mechanical stresses.

The rubber blends vulcanizable with peroxides that are known in the art generally consists of the following components:

Rubber

Examples of elastomers vulcanizable with peroxides are natural rubber, ethylene/propylene/diene copolymers, butadiene/styrene rubbers, butadiene/acrylonitrile rubbers, silicone rubbers, fluoroelastomers containing peroxy vulcanization sites, blends of rubbers of which at least one is vulcanizable with peroxides or with mixed vulcanization systems, in particular, mixtures of a fluoroelastomer based on $CH_2 = CF_2$ and of an elastomeric polymer $C_2F_4/C_3H_6$ of the type AFLAS®.

Peroxy Starter (Vulcanizing Agent)

This consists of an organic peroxide such as, for example, benzoylperoxide, dicumyl peroxide, 2,5-dimethyl-2,5-di(t-butylperoxy)hexane, α,α'bis(t-butylperoxy)-diisopropylbenzene, aliphatic or cyclic bis-peroxycarbonates.

Vulcanizing Coagent

This consists of an unsaturated di- or tri-functional compound such as, for example, triallylcyanurate, triallylisocyanurate, divinylbenzene, m-phenylene-bis(maleimide).

Reinforcing Fillers

Carbon black, silica, etc.

Acid Acceptors

Such as, for example, lead, zinc, calcium, magnesium oxides.

Processing Coadjuvants

These coadjuvants are products endowed with plasticizing or lubricating properties such as, for example, vegetable waxes, low molecular weight polyethylenes, various stearates, polyesters, octadecylamines and the like.

The use of such coadjuvants is necessary because of the poor extrudability characteristics of the blends and the phenomena of adhesion to the dies and the soiling of them.

In a few cases the conventional processing coadjuvants give rise to problems of interference with the peroxy vulcanization system and to an unsatisfactory appearance of the surface of the molded article. Furthermore, in the specific case of fluoroelastomers, a "thermal stabilization" (post-vulcanization) at temperatures of from 200 to 250°C for a time ranging from 10 to 30 hours is absolutely necessary to impart to the fluoroelastomers the well-known properties of stability to heat, chemical agents and solvents. During this operation the common plasticizing agents (glycols, stearates, organic phosphates, oleates, phthalates etc.) volatilize and/or decompose. That causes a remarkable degradation of the mechanical properties of the final articles, in particular:

- an excessive increase in hardness
- a decay of the stability to compression set,
- a decay of the elastic characteristics (low elongation and high modulus),
- a low thermal stability which precludes the use thereof in extreme conditions (above 180°C).

In conclusion, the advantages that can be achieved during processing result in unacceptable shortcomings in the final articles.

Thus, the use of plasticizing or lubricating agents is limited to small amounts (1 to 3 p.h.r.) which do not materially alter the final properties of the vulcanized article and, on the other hand, are insufficient to meet the aforesaid requirements.

In particular, it has been ascertained that, by employing perfluorosilicone oils, the hardness may be lowered by 4 to 5 points but this results in difficulties as regards the mixing with and incorporation into the fluoroelastomers. Furthermore, a reduction in the vulcanization rate and a worsening of the compression set value and thermal stability can be observed.

The use of fluorinated polymers such as Viton LM®, produced by Du Pont which have a very low molecular weight and the consistency of wax, was adopted in order to impart rheological characteristics to the blends, in particular, during extrusion. In this way it is possible to obtain manufactured articles of large size and with complicated profiles. However, the use of such a "plasticizer" in amounts of 10 to 20

parts by weight for 100 parts of fluoroelastomer is possible only with conventional vulcanizing systems while it is not useful for vulcanizing systems based on peroxides. The result is a worsening of the stability to heat, chemical agents, solvents and oils and of the compression set value.

Surprisingly, by using the additives according to the present invention in amounts of 0 to 1 part by weight when the additive is not brominated and from 0.01 to 5 parts by weight for 100 parts of rubber when the additive is brominated and, preferably, up to 3 parts by weight in the case of additives having a mean molecular weight equal to or higher than 2 500, and up to 1.5 parts by weight in the case of additives having a mean molecular weight below 2 500, blends were obtained which - the other formulation elements (rubber, starter, crosslinking coagent, acidity acceptors) being the same - exhibited a better behaviour with regard to the processability during extrusion and the release of the vulcanized article from the dies.

The use of high molecular weight additives improves in particular the processability in terms of yield and appearance of the extrudate while the lower molecular weight additives migrate to the surface more easily, thus, imparting in particular an excellent detachability of the vulcanized article from the molding die. For this reason the amount of these low molecular weight additives has to be limited in order to prevent greasiness or, in the case of a high bromine functionality, a tangible interference with the vulcanization process.

In fact, if the proper amounts of additives according to this invention are employed, these additives do not substantially interfere with the vulcanizing system. Actually, vulcanization tests carried out according to the standard ASTM D 2084 with an oscillating-disc rheometer (Monsanto) did not show significant differences with regard either to the rate or the vulcanization yield. Conversely, a reduction of the minimum torque was observed which is indicative of better processability of the mix.

Furthermore, the bromine-containing additive forms a chemical bond with the elastomeric chain during the vulcanization process.

In fact, if the mix containing the additive is subjected to extraction tests with the solvent $CFC_2$-$CF_2Cl$, the additive is recovered in the extraction liquid. Conversely, if the additive-containing mix is vulcanized, a subsequent extraction with the same solvent does not lead to a recovery in the liquid of the additive.

This, in practice, leads to a further improvement: The final article retains an excellent surface appearance and does not exhibit greasiness.

The use of the additives according to the present invention is particularly suitable for fluoroelastomers in general such as, for example, the copolymers of $CH_2$=$CF_2$ with $C_3F_6$ or with $C_3F_6$ + $C_2F_4$ and containing peroxy crosslinking sites, the copolymers of $C_2F_4$ with propylene or with perfluoroalkyl-perfluorovinyl ethers (in particular methylvinyl ether) containing, in the latter case, a cure site monomer, terpolymers of $C_3F_6$, vinylidene fluoride and perfluoroalkyl-perfluorovinyl ether (in particular, methylvinyl ether) containing a cure site monomer.

The following examples further illustrate the application of the present invention.

EXAMPLES 1 - 10

By means of the usual mixing techniques rubbers blends comprising the ingredients indicated in table 1 were prepared and the tests and determination indicated in table 1 were carried out.

Ingredients used in these blends

Elastomer 1: $CH_2$=$CF_2$/$C_3F_6$/$C_2F_4$ terpolymer in a molar ratio of 2/1/1, containing as a cure site monomer a brominated olefin having a Mooney viscosity ML (1+4) at 100°C of 104 and a total bromine content of 3 500 ppm (VITON® GF).

Elastomer 2: $CH_2$ = $CF_2$/$C_3F_6$ copolymer in a molar ratio of 3.5/1, containing as a cure site monomer a brominated olefin having a Mooney viscosity ML (1+4) at 100°C of 109 and a total bromine content of 2 000 ppm (FLUOREL® 2480).

Elastomer 3: $C_2F_4$/$C_3H_6$ copolymer in a molar ratio of 1/1 having a Mooney viscosity ML (1+4) at 100°C of 130 (AFLAS®).

Luperco® 101 XL = 2,5-dimethyl-2,5-di(t-butylperoxy)-hexane; product at 45% by weight with 55% of inert filler.

TAIC: Triallylisocyanurate

Black MT: Carbon black for rubbers (ASTM N 990)

Additive 1: Perfluoropolyether from hexafluoropropene, brominated at the end group, containing on average about 1 bromine atom per molecule (functionality about 1), having a viscosity of 30 $mm^2$/S (cSt) at 20°C and a molecular weight of about 1 220.

Additive 1 was prepared as follows:

Into a cylindrical photochemical reactor having an optical path of 0.5 cm, equipped with a coaxial quartz sheath for housing a mercury vapour lamp (type Hanau TQ150) or a noble gas (for example Xenon) discharge lamp (type PEK, INC x 75), equipped with a magnetic stirrer, a reflux condenser, a $CO_2$ trap and a thermoregulation system for both the reactor and the sheath, 400 g of perfluoropolyether of

$C_3F_6$ having an activated oxygen content equal to 0.75% by weight and an osmometrically determined molecular weight equal to 2 550 u.m.a. were charged.

10 g of bromine were added and the temperature was brought up to 100°C. Subsequently, after switching on the lamp, 20 g of bromine were added during the test which, on the whole, lasted for 15 hours. The reaction mass was then discharged into a flask and the residual bromine was distilled under vacuum.

395 g of a product having a mean molecular weight equal to 1 220 u.m.a., practically no oxidation properties and brominated end groups of the type $R_fOCF_2Br$ and

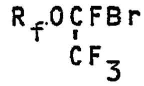

in a ratio of one brominated end group for each perfluoropolyether chain, the other end group being composed of perfluoromethyl units $-O-CF_3$ or acyl fluorides

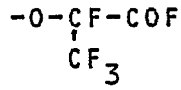

or formyl fluoride

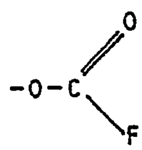

were obtained.

Additive 2: Perfluoropolyether from brominated tetrafluoroethylene with a bromine functionality of about 1.8 having a viscosity of 29.8 $mm^2/S$ (cSt) at 20°C and a molecular weight of about 4 500.

Additive 2 was prepared as follows:

Into a cylindrical photochemical reactor having a capacity of 300 $cm^3$ with an optical path of 0.5 cm, equipped with a coaxial quartz sheath for housing a mercury vapour lamp (type Hanau TQ 150) or a noble gas discharge lamp, for example, Xenon (type PEK, INC x 75), equipped with a magnetic stirrer, a reflux dropping funnel, a $CO_2$ trap and a thermoregulation system both for the reactor and for the sheath system, 420 g of perfluoropolyether from tetrafluoroethylene having a peroxy oxygen content (P.O.) of 1.1% by weight, a viscosity of 10 900 $mm^2/S$ (cSt) (at 20°C) and an m/n ratio, determined by NMR analysis (19F) equal to 0.95 were charged. After addition of 5 ml of $Br_2$, the blend was mixed and the temperature brought up to 110°C and maintained at this value for 16 hours in the course of which a further 25 ml of bromine were added. At the end of the reaction, after removal of the bromine, 397 g of a product having a viscosity of 29.8 $mm^2/S$ (cSt) (at 20°C) and an osmometrically determined molecular weight equal to 4 500 u.m.a. were obtained. The functionality, considered as a ratio between brominated end groups of the type $-OCF_2Br$ and the sum of the neutral end groups of the types $-OCF_3$, $-OCF_2CF_3$ and acid $-OCOF$, determined from the relevant NMR signals ($19_F$) was found to be equal to 1.8.

Additive 3: Perfluoropolyether from neutral tetrafluoroethylene having a viscosity of 30 $mm^2/S$ (cSt).

Tests

Detachability test: The mix was vulcanized in a press at 170°C for 15 minutes. The test piece was then removed from the mold at 170°C and the detachability was immediately evaluated on the basis of the percentage of breaks and/or of residue of vulcanized product, if any, adhering to the mold.

In table 1 the detachability is indicated by:

S (low): If, out of 4 test pieces, all test pieces break and/or leave residues of vulcanized product on the mold; or, if 1 test piece, at the most, detaches without breaking and/or leaving residues of vulcanized product on the mold;

D (fairly good): If, out of 4 test pieces, 2 or 3 test pieces detach without breaking and/or leaving residues of vulcanized product adhering to the mold.

B (good): If, out of 4 test pieces, all the test pieces detach without breaking and/or leaving vulcanized residues adhering to the mold.

Processability test in the extruder.

The processability was evaluated according to ASTM D 2230/78 which classifies the extrudates both as extrudate amount in grams per minute (Method B) and as surface appearance of the Garvey rating (Method A - System B).

Characteristics of the vulcanized test pieces obtained

The characteristics were determined on test pieces obtained by vulcanization in a mold at 170°C for 15 minutes and subsequent post-vulcanization in an oven at 250°C for 16 hours, the post-vulcanization being preceded by a temperature rise from 100°C to 250°C within 8 hours.

In table 1, examples 1, 7 and 9 are comparative examples, i e., example 1 is to be compared with examples 2, 3, 4, 5 and 6; example 7 is to be compared with example 8; example 9 is to be compared with example 10.

With regard to the thermal stability, a comparison between the examples of the invention with additive and those without additive does not allow determination of a recognisable effect of the additive according to the invention as the changes occuring upon variation of the additive fall within the variability of the measuring method.

TABLE 1

| EXAMPLE | | 1 | 2 | 3 | 4 | 5 | 6 | 7 | 8 | 9 | 10 |
|---|---|---|---|---|---|---|---|---|---|---|---|
| ELASTOMER 1 | parts by weight | 100 | 100 | 100 | 100 | 100 | 100 | – | – | – | – |
| ELASTOMER 2 | parts by weight | – | – | – | – | – | – | 100 | 100 | – | – |
| ELASTOMER 3 | parts by weight | – | – | – | – | – | – | – | – | 100 | 100 |
| LUPERCO 101XL® | parts by weight | 3 | 3 | 3 | 3 | 3 | 3 | 3 | 3 | 3 | 3 |
| TAIC | parts by weight | 3 | 3 | 3 | 3 | 3 | 3 | 3 | 3 | 3 | 3 |
| PbO | parts by weight | 3 | 3 | 3 | 3 | 3 | 3 | 3 | 3 | 3 | 3 |
| BLACK MT | parts by weight | 30 | 30 | 30 | 30 | 30 | 30 | 30 | 30 | 30 | 30 |
| ADDITIVE 1 | parts by weight | – | 0.5 | – | 1.5 | 3 | – | – | 3 | – | – |
| ADDITIVE 2 | parts by weight | – | – | – | – | – | 3 | – | – | – | 3 |
| ADDITIVE 3 | parts by weight | – | – | 0.5 | – | – | – | – | – | – | – |
| THERMOMECHANICAL CHARACTERISTICS | | | | | | | | | | | |
| ODR at 180°C (1) | | | | | | | | | | | |
| Min. torque, Nm (inch. lbs) | | 2.49 (22) | 2.49 (22) | 2.49 (22) | 2.37 (21) | 2.26 (20) | 2.26 (20) | 2.83 (25) | 2.71 (24) | 1.92 (17) | 1.81 (16) |
| ts 10 (s) | | 79 | 81 | 78 | 81 | 84 | 80 | 84 | 87 | 109 | 111 |
| ts 50 (s) | | 114 | 120 | 115 | 123 | 132 | 123 | 117 | 133 | 211 | 295 |
| Max. torque, Nm (inch. lbs) | | 13.00 (115) | 12.20 (108) | 12.32 (109) | 11.87 (105) | 11.07 (98) | 10.96 (97) | 12.66 (112) | 11.07 (98) | 8.48 (75) | 7.68 (68) |
| PROCESSABILITY (2) | | | | | | | | | | | |
| yield (a) (g/min) | | 32 | 32 | 32 | 39 | 45 | 49 | 44 | 47 | 26 | 35 |
| Garvey rating (b) | | 6 | 8 | 8 | 9 | 10 | 10 | 9 | 11 | 8 | 8 |
| DETACHABILITY | | S | D | S | B | B | D | S | B | S | D |
| VULCANIZED TEST-PIECE CHARACTERISTICS | | | | | | | | | | | |
| M100 (MPa) (modulus at 100)CR | | 6,1 | 6,2 | 6,2 | 6,1 | 5,0 | 4,9 | 4,0 | 3,1 | 4,3 | 3,9 |

TABLE 1 (Continued)

| EXAMPLE | 1 | 2 | 3 | 4 | 5 | 6 | 7 | 8 | 9 | 10 |
|---|---|---|---|---|---|---|---|---|---|---|
| (MPa) (tensile stress) | 19,4 | 21,6 | 21,5 | 20,3 | 17,0 | 17,0 | 17,8 | 14,8 | 16,6 | 16,6 |
| AR (%) (elongation at break) | 216 | 224 | 216 | 216 | 219 | 220 | 278 | 292 | 261 | 261 |
| Hardness, Shore A (points) (4) | 72 | 75 | 75 | 73 | 70 | 71 | 70 | 70 | 70 | 70 |
| COMPRESSION SET at 200°C X 70h (5) | | | | | | | | | | |
| O-ring (%) 25×3,53 (in mm) | 33 | 33 | 34 | 33 | 33 | 33 | 32 | 32 | 48 | 48 |
| CHEMICAL STABILITY IN BP Olex (MK 4409) at 150°C for 7 days (6) | | | | | | | | | | |
| Δ P (%) | 0,4 | 0,4 | 0,4 | 0,4 | 0,4 | 0,4 | 0,4 | 0,4 | 3,3 | 3,3 |
| Δ V (%) | 0,8 | 0,8 | 0,8 | 0,8 | 0,8 | 0,8 | 0,8 | 0,8 | 6,0 | 6,0 |
| THERMAL STABILITY at 275°C for 70 h (7) | | | | | | | | | | |
| Δ CR (%) | −62 | −43 | −44 | −36 | −60 | −62 | −55 | −36 | −44 | −40 |
| Δ AR (%) | +44 | +41 | +31 | +35 | +59 | +57 | −34 | −34 | +16 | +1 |
| Δ Hardness (points) | −1 | −2 | −2 | −2 | −1 | −1 | −1 | −2 | −7 | −5 |

(1) ASTM D-2084
(2) ASTM D-2230 – 78 (a) Method B, (b) Method A – System B
(3) ASTM D-412
(4) ASTM D-2240
(5) ASTM D-395 Method B
(6) ASTM D-471
(7) ASTM D-573

## Claims

1. Rubbers or rubber blends vulcanizable with peroxides or mixed peroxy and ionic vulcanization systems having improved processability properties containing, as processing coadjuvants, brominated and/or non-brominated additives in an amount of from 0.01 to 5 parts by weight for 100 parts by weight of elastomer when the coadjuvant is brominated and 0 to 1 part by weight for 100 parts by weight of elastomer when the coadjuvant is non-brominated, said coadjuvants having the following general formulae:

$$\text{(I)} \qquad A-(O-C_3F_6)_m-(O\underset{\underset{\displaystyle T}{|}}{C}F)_n-(OCF_2CF_2)_q-O-B$$

wherein T is F or $CF_3$, m, n and q are integers, zero included, m+n+q ranges from 2 to 200,

$$\frac{m}{n+q}$$

is ≤ 50 when n and/or q are different from zero, when m = 0, q/n is ≥ 0.2 and ≤ 20, n being different from zero; when q = 0, m/n ranges from 1 to 50, n being different from zero; A and B are the same or different and represent

$$-CF_2X,\ -CF_2-CF_2-X,\ -\underset{\underset{\displaystyle CF_3}{|}}{C}F-X,\ -CF_2-CFX-CF_3,\ -COF,\ -CF_2-COF$$

$$\text{or}\ -\underset{\underset{\displaystyle CF_3}{|}}{C}F-COF$$

X being bromine or fluorine; when m is different from zero, X may be bromine only in A or B;

$$\text{(II)} \qquad F-(CF_2CF_2CF_2-O)_n-CF_2CF_3$$

wherein n is an integer higher than 2 and lower than 200; whereby said coadjuvants may also be a mixture of non-brominated additives of classes (I) and/or (II) with brominated additives of class (I).

2. The rubbers of rubber blends according to claim 1, wherein the coadjuvant has an average molecular weight ranging from 500 to 10 000.

3. The rubbers or rubber blends according to claim 2, wherein the coadjuvant is present in an amount of up to 3 parts by weight per 100 parts of elastomer when the molecular weight is ≥ 2 500 and up to 1.5 parts by weight when the molecular weight is < 2 500.

4. The rubbers or rubber blends according to any one of claims 1 to 3, wherein the elastomer is selected from:

(a) fluoroelastomeric copolymers of $CH_2=CF_2$ with $C_3F_6$, optionally containing $C_2F_4$;

(b) copolymers of $C_2F_4$ with propylene;

(c) fluoroelastomeric copolymers of $C_2F_4$ with perfluoroalkylperfluorovinylethers;

(d) fluoroelastomeric terpolymers of $C_3F_6$, $CH_2=CF_2$ and a perfluoroalkylperfluorovinylether;

(a), (c) and (d) containing peroxy crosslinking sites.

5. Rubbers or rubber blends according to any one of claims 1 to 3, wherein the elastomer is a mixture of a fluoroelastomer based on $CH_2=CF_2$ and an elastomeric copolymer of $C_2F_4/C_3H_6$.

## Patentansprüche

1. Kautschuke oder Kautschukmischungen, die mit Peroxiden oder gemischten Peroxy- und ionischen Vulkanisationssystemen vulkanisierbar sind und verbesserte Verarbeitungseigenschaften besitzen, enthaltend als Verarbeitungshilfsmittel bromierte und/oder nicht-bromierte Additive in einer Menge von 0,01 bis 5 Gewichtsteilen pro 100 Gewichtsteile Elastomer, wenn das Hilfsmittel bromiert ist, und 0 bis 1 Gewichtsteil pro 100 Gewichtsteile Elastomer, wenn das Hilfsmittel nicht-bromiert ist, wobei die Hilfsmittel die folgenden allgemeinen Formeln haben:

$$(I) \qquad A-(O-C_3F_6)_m-(\underset{\displaystyle T}{\underset{|}{OCF}})_n-(OCF_2CF_2)_q-O-B$$

worin T F oder $CF_3$ ist, m, n und q ganze Zahlen, einschließlich Null sind, m+n+q im Bereich von 2 bis 200 liegt, m/n+q ≤ 50 ist, wenn n und/oder q von Null verschieden sind, wenn m = 0, q/n ist ≥ 0,2 und ≤ 20, wobei n von Null verschieden ist; wenn q = 0, liegt m/n im Bereich von 1 bis 50, wobei n von Null verschieden ist; A und B sind gleich oder unterschiedlich und bedeuten

$$-CF_2X,\ -CF_2-CF_2-X,\ -\underset{\displaystyle CF_3}{\underset{|}{CF}}-X,\ -CF_2-CFX-CF_3,\ -COF,\ -CF_2-COF$$

$$\text{oder} \quad -\underset{\displaystyle CF_3}{\underset{|}{CF}}-COF$$

wobei X Brom oder Fluor ist; wenn m verschieden ist von Null, kann X auch nur Brom in A oder B sein;

$$(II) \qquad F-(CF_2CF_2CF_2-O)_n-CF_2CF_3$$

worin n eine ganze Zahl über 2 und unter 200 ist;
wobei die Hilfsmittel auch eine Mischung aus nicht-bromierten Additiven der Klassen (I) und/oder (II) mit bromierten Additiven der Klasse (I) sein können.

2. Kautschuke oder Kautschukmischungen nach Anspruch 1, worin das Hilfsmittel ein mittleres Molekulargewicht von 500 bis 10 000 hat.

3. Kautschuke oder Kautschukmischungen nach Anspruch 2, worin das Hilfsmittel in einer Menge von bis zu 3 Gewichtsteilen pro 100 Gewichtsteile Elastomer vorhanden ist, wenn das Molekulargewicht ≥ 2500, und bis zu 1,5 Gewichtsteilen, wenn das Molekulargewicht < 2500.

4. Kautschuke oder Kautschukmischungen nach irgendeinem der Ansprüche 1 bis 3, worin das Elastomer ausgewählt ist aus:

(a) Fluorelastomer-Copolymeren von $CH_2=CF_2$ mit $C_3F_6$, die gegebenenfalls $C_2F_4$ enthalten;
(b) Copolymeren von $C_2F_4$ mit Propylen;
(c) Fluorelastomer-Copolymeren von $C_2F_4$ mit Perfluoralkylperfluorvinylethern;
(d) Fluorelastomer-Terpolymeren von $C_3F_6$, $CH_2=CF_2$ und einem Perfluoralkylperfluorvinylether;

wobei (a), (c) und (d) Peroxy-Vernetzungsstellen enthalten.

5. Kautschuke oder Kautschukmischungen nach irgendeinem der Ansprüche 1 bis 3, worin das Elastomer eine Mischung aus einem Fluorelastomer auf Basis von $CH_2=CF_2$ und einem Elastomer-Copolymer von $C_2F_4/C_3F_6$ ist.

**Revendications**

1. Caoutchoucs ou mélanges de caoutchoucs, vulcanisables avec des peroxydes ou des systèmes de vulcanisation ioniques et peroxydiques mixtes, présentant des propriétés améliorées d'aptitude à la mise en œuvre, contenant, comme co-adjuvants de mise en œuvre, des additifs bromés et/ou non-bromés en une quantité de 0,01 à 5 parties en poids pour 100 parties en poids d'élastomère quand le co-adjuvant est bromé, et de 0 à 1 partie en poids pour 100 parties en poids d'élastomère quand le co-adjuvant est non-bromé, lesdits co-adjuvants ayant les formules générales suivantes:

$$(I) \qquad A-(O-C_3F_6)_m-(\underset{\displaystyle T}{\underset{|}{OCF}})_n-(OCF_2CF_2)_q-O-B$$

dans laquelle T est F ou $CF_3$, m, n et q sont des entiers, zéro compris, m+n+q est compris entre 2 et 200, m/(n+q) est ≤ 50 quand n et/ou q sont différents de zéro, quand m = 0, q/b est ≥ 0,2 et ≤ 20, n étant différent de zéro; quand $q = 0$, $m/n$ est compris entre 1 et 50, n étant différent de zéro; A et B sont identiques ou différents et représentent chacun:

$$-CF_2X,\ -CF_2-CF_2-X,\ -\underset{\displaystyle CF_3}{\underset{|}{CF}}-X,\ -CF_2-CFX-CF_3,\ -COF,\ -CF_2-COF$$

$$\text{ou}\ -\underset{\displaystyle CF_3}{\underset{|}{CF}}-COF$$

X étant le brome ou le fluor; quand m est différent de zéro, X peut être le brome seulement dans A ou B;

$$\text{(II)} \qquad F-(CF_2CF_2CF_2-O)_n-CF_2-CF_3$$

dans laquelle n est un entier supérieur à 2 et inférieur à 200;
lesdits co-adjuvants pouvant aussi être constitués d'un mélange d'additifs non-bromés des classes (I) et/ou (II), avec des additifs bromés de la classe (I).

2. Les caoutchoucs ou mélanges de caoutchoucs selon la revendication 1, dans lesquels le co-adjuvant a une masse moléculaire moyenne comprise entre 500 et 10 000.

3. Les caoutchoucs ou mélanges de caoutchoucs selon la revendication 2, dans lesquels le co-adjuvant est présent en une quantité allant jusqu'à 3 parties en poids pour 100 parties d'élastomère quand la masse moléculaire est $\geq 2500$, et jusqu'à 1,5 parties en poids quand la masse moléculaire est $< 2500$.

4. Les caoutchoucs ou mélanges de caoutchoucs selon l'une quelconque des revendications 1 à 3, dans lesquels l'élastomère est choisi entre:

(a) les copolymères fluoroélastomères de $CH_2{=}CF_2$ avec $C_3F_6$ contenant facultativement $C_2F_4$;
(b) les copolymères de $C_2F_4$ et de propylène;
(c) les copolymères fluoroélastomères de $C_2F_4$ et de perfluoroalkylperfluorovinyléthers;
(d) les terpolymères fluoroélastomère de $C_3F_6$, $CH_2{=}CF_2$ et d'un perfluoroalkylperfluorovinyléther;

(a), (c) et (d) contenant des sites de réticulation peroxydiques.

5. Caoutchoucs ou mélanges de caoutchoucs selon l'une quelconque des revendications 1 à 3, dans lesquels l'élastomère est un mélange d'un fluoroélastomère à base de $CH_2{=}CF_2$ et d'un copolymère élastomère de $C_2F_4/C_3H_6$.